# EUROPEAN PATENT SPECIFICATION

(11) **EP 1 860 749 B1**
(45) Date of publication and mention of the grant of the patent: **05.09.2018**
(21) Application number: 07010226.4
(22) Date of filing: 23.05.2007
(51) Int. Cl.: H02G 15/18

(54) **Support coil comprising a mechanical locking means and method for the production thereof**
Stützwendel mit mechanischer Verriegelung und deren Herstellungsverfahren
Support de ruban hélicoïdal comportant un verrouillage mécanique et son procédé de fabrication

(30) Priority: 24.05.2006 DE 102006024840
(43) Date of publication of application: 28.11.2007
(73) Proprietor: Tyco Electronics Raychem GmbH, 85521 Ottobrunn (DE)
(72) Inventor: Simonsohn, Thilo, 81735 München (DE); Heindl, Christian, 81927 München (DE)
(74) Representative: Grünecker Patent- und Rechtsanwälte PartG mbB

(56) References cited:
- EP-A1- 0 619 636
- WO-A1-96/24977
- WO-A1-98/21802
- DE-C1- 19 820 634
- US-A1- 2005 208 270

## Description

The invention relates to a tubular support coil for radially supporting resiliently expanded tube material, consisting of at least one extruded profile body which is wound to form a plurality of windings and the end faces of which are joined together in the longitudinal direction of the support coil, at least in certain portions, and/or are mechanically locked together by a ratchet arrangement in the longitudinal direction.

Support coils of this type are known in the art and are disclosed in WO 96/24977 A1, US 2005/208270 A1, DE 198 20 634 C1 and EP 0 619 636 A1. They are used to keep tube material, such as for example insulating tubes and sleeve bodies, expanded prior to final fitting. The insulating tubes and sleeve bodies are used for electrically insulating or sealing electrical components in power engineering such as, for example, cable couplings or cable plug connectors. As high electrical voltages of, for example, above 100 kV can be applied in these components, the insulating tubes have thick walls and are made of materials having good electrical insulation properties such as, for example, silicone. Tube materials of this type, known as cold shrink tubes, are intended to adapt resiliently to the outer contour of the component to be insulated and enclose it as tightly as possible. The diameter of the tube material is therefore resiliently expanded by up to four times its original size prior to fitting. The electrical and other components can therefore easily be introduced into the tube material.

In order to keep the tube material expanded prior to fitting thereof, there is inserted into the tube material a support body that is in the form of the above-mentioned support coil that absorbs the tube material restoring force acting through the resilient expansion. For fitting, the component to be enclosed is positioned in the internally hollow support coil. The support coil then has to be removed from the tube material to allow the tube material to tighten around the component.

Support coils of the above-mentioned type have proven successful in allowing the support coil, around which the tube material tightly wraps and on which compressive forces of, for example, 10 bar can act, to be removed by hand from the tube material. Unwinding of the extruded profile body can cause a support coil of this type to become gradually unraveled in the longitudinal direction in that the unwound extruded profile body is extracted through the hollow support coil. If the support coil gradually unravels in this way, the tube material automatically tightens around the component to be insulated. The support coil can thus be removed from the tube material manually, without further aids or devices.

The support coils of the aforementioned type thus, on the one hand, are permanently able to withstand the high pressure emanating from the expanded tube material and, on the other hand, are able to be removed manually from the tube material by withdrawing the extruded profile body. It is also important for the support coil to have a wall thickness that is as low as possible to allow sufficient overall space for the introduction inside the support coil of the components to be enclosed.

In order to meet these requirements, the end faces of the wound extruded profile body are, in the case of the known support coils, joined together in a material-uniting manner, for example by welding or bonding. In addition, the end faces to be connected are formed so as to interlock.

Known support coils are described, for example, in US 5,087,492, EP 0619636A1, WO 93/22816, WO 83/00779, DE 19820634C1, EP 0399263A2, US 5,670,223 or WO 96/24977.

A problem with the known support coils is that the material-uniting connection between the end faces can be non-uniformly tight. A non-uniform connection can cause the detaching forces required for manually unwinding the extruded profile body in some cases to fluctuate markedly, so separating the connected end faces can, on unraveling of the support coils, become difficult or can be impossible by hand, or the tubular support coil can fail and break under the loading of the resiliently expanded tube material.

The object of the present invention is therefore to provide a support coil which is improved over the prior art, can be produced cost-effectively, reliably withstands compressive forces acting radially from outside, easily unravels manually with low detaching force and easily can be removed from the tube material.

According to the invention, this object is achieved in that the end faces are further mechanically locked together by a tongue and groove arrangement in the radial direction, wherein on one end face of the winding there are formed at least one tongue projecting into the longitudinal direction and a ratchet mount and wherein on the other end face of the winding there are formed at least one groove substantially complementary to the at least one tongue and a ratchet element. The tongue and groove arrangement is preferably spatially separated from the ratchet arrangement.

This solution according to the invention is of particularly simple construction and joins the end faces of the extruded profile body sufficiently tightly to eliminate the need for additional material-uniting connection of the end faces. The support coil according to the invention can thus be produced particularly cost-effectively, because costly and time-consuming welding or bonding of the end faces is dispensed with.

During the above-described unraveling of the support coil caused by withdrawing the unwound extruded profile body through the support coil, the still unwound extruded profile body is rotated about a pivot point in a detachment direction at the moment at which the connected end faces become detached from each other. This movement draws the end faces apart at the radially outer end and presses them together at the radially inner end, i.e. a parting joint opens up. In the support coil according to the invention, this movement can be completed particularly easily, as the tongue and groove arrangement is spatially separated from the ratchet arrangement locking in the longitudinal direction. The mechanical locking of the end faces by the tongue and groove arrangement and the ratchet arrangement thus allows simple opening of the parting joint on unraveling of the support coil.

The solution according to the invention has both a high radial supporting effect and a low requisite detaching force.

The support coil according to the invention can be developed by various, independent embodiments, each of which is advantageous per se. These embodiments, and the advantages associated with each of the embodiments, will briefly be examined hereinafter.

The tongue and groove arrangement can thus be engaged in the longitudinal direction and the tongue and groove arrangement can be located outside the ratchet arrangement in the radial direction. This has the advantage that the tongue and groove arrangement is formed in the region in which the end faces are drawn apart from each other on detachment.

The ratchet arrangement can also be located, in the radial direction, within or around a pivot point about which the extruded profile body rotates on separation of the end faces by withdrawing the unwound extruded profile body from the support coil. This has the advantage that the ratchet arrangement is formed in a region, which is not drawn apart on separation of the connected end faces. The ratchet arrangement therefore does not counteract the detaching movement. The ratchet arrangement can, in particular, be located inside the tubular support coil in the radial direction. In an advantageous embodiment, the extruded profile body can have at least one weakened region which is formed between the tongue and groove arrangement and the ratchet arrangement and in which the extruded profile body is elastically or plastically deformable. This has the advantage that the extruded profile body can he bent on unwinding of the support coil for separating the tongue and groove arrangement and the ratchet arrangement, and this leads to a particularly low detaching force. The weakened region can, in particular, be formed between a tongue of the tongue and groove arrangement and a ratchet element of the ratchet arrangement. Moreover, the weakened region can have the lowest radial thickness of the extruded profile body. The weakened region can, for example, be in the form of a projection, which protrudes, in the longitudinal direction and on which a ratchet element of the ratchet arrangement is configured, the radial thickness of the projection being lower than that of the remaining extruded profile body. A projection of such configuration forms a type of film hinge by means of which the ratchet element can be swiveled.

In order to reduce the detaching force required for unwinding the extruded profile body, the ratchet arrangement can have a deflection region which is not filled by the ratchet element relative to a ratchet mount and into which the ratchet element can be moved on separation of the end faces. This embodiment prevents the ratchet arrangement from supporting the extruded profile body counter to the detachment direction, as the ratchet element is moved into the deflection region with little resistance on separation of the end faces. A deflection region, which is not filled by the tongue, can also be formed in the groove to prevent clamping or supporting counter to the movement in the detachment direction.

In order to make the construction of the extruded profile body according to the invention particularly simple and compact, the ratchet arrangement and the tongue and groove arrangement can be mutually integrated in certain portions. The ratchet element can thus form the groove in certain portions or the tongue the ratchet mount in certain portions, for example. The ratchet element and the groove or the ratchet mount and the tongue are each formed on the same side of the extruded profile body in the longitudinal direction.

In an advantageous development, the tongue and groove arrangement can be substantially rectangular in cross-section of the extruded profile body. This has the advantage that the rectangular cross-section has a relatively high radial supporting cffcct, so the length of the tongue can be relatively short in the longitudinal direction. This length can be further reduced if a plurality of tongues is formed with corresponding grooves on the extruded profile body.

Alternatively, the radially outer side of the tongue and groove arrangement can extend in the shape of an arc, in cross-section of the extruded profile body, at least in certain portions. This has the advantage that the contour of the tongue and groove arrangement assists the rotational movement of the extruded profile body during detachment, so a particularly low detaching force is necessary. In particular, the arc can be formed substantially as an arc of a circle around a pivot point about which the extruded profile body substantially rotates on separation of the end faces by withdrawing the unwound extruded profile body from the support coil. The tongue and groove arrangement is thus configured precisely in accordance with the detaching movement of the extruded profile body, so there is only very little resistance on detachment.

In order to ensure a secure fit of the ratchet element in the ratchet mount, the ratchet arrangement can have at least one securing element, which secures the fit of the ratchet element in the ratchet mount. This securing element can, for example, be in the form of a resiliently deflectable locking means, which engages with a counter-locking means in the ratchet mount. Alternatively, the securing element can be configured in an interlocking manner, for example as a hook.

In an advantageous development, the extruded profile body can be in the form of a closed hollow profile. This has the advantage of requiring less material than for a complete profile without detracting from the stability of the extruded profile body. Alternatively, the extruded profile body can also be made of an open profile in which radially inwardly opening, material-saving recesses, for example in the form of further grooves, are formed.

In order to allow above-average degrees of force to be absorbed, for example through particularly thick tube material, the connected end faces of the extruded profile body can be bonded or welded, at least in certain portions.

In addition to the above-mentioned support coil and the advantageous embodiments thereof, the invention also relates to a method for producing a support coil for radially supporting resiliently expanded tube material, wherein an extruded profile body is wound to form the support coil and the end faces of the extruded profile body are axially joined together by a ratchet arrangement so as to be secured against pull in the longitudinal direction. In order to allow the support coil to be produced as simply, quickly and cost-effectively as possible, the invention provides for the end faces of the extruded profile body to be joined together by a tongue and groove arrangement so as to be secured against radial displacement in the longitudinal direction.

Furthermore, the end faces can be axially secured by the ratchet arrangement in order to withstand tensile forces through the tube material.

In order to allow the end faces of the extruded profile body to be mechanically locked as simply as possible, first the tongue and groove arrangement and then the ratchet arrangement can be engaged. The ratchet element can thus, for example, project radially inward, inclined toward the longitudinal direction, once the extruded profile body has been produced. The ratchet element therefore initially protrudes from the ratchet mount once the tongue and groove arrangement has been joined. The ratchet element is then pressed into the ratchet mount, for example by machine.

In addition to the support coil and the method for the production thereof, the invention also relates to a tube arrangement comprising a tube material, such as for example an insulating tube or a sleeve body, which is resiliently expanded radially outward, and comprising a support coil which is arranged in the tube material and radially inwardly supports the expanded tube material. In order to provide a cost-effective tube arrangement in which the support coil can easily be removed from the tube material, the invention provides for the support coil to be configured in accordance with any one of the above-described embodiments.

The invention will be described hereinafter, by way of example, with reference to the appended drawings. The differing features can, in this regard, be combined independently of one another, as stated hereinbefore in the individual advantageous embodiments.

In the drawings:
Fig. 1 is a schematic view of an exemplary embodiment of a support coil according to the invention;
Fig. 2 is a schematic sectional view of detail A from Fig. 1;
Fig. 3 is a schematic cross-section of the extruded profile body from Fig. 1 and 2;
Fig. 4 is a schematic view of a tube arrangement according to the invention comprising the support coil from Fig. 1; and
Figs. 5 to 13 are each schematic sectional views of further alternative embodiments of the extruded profile body.

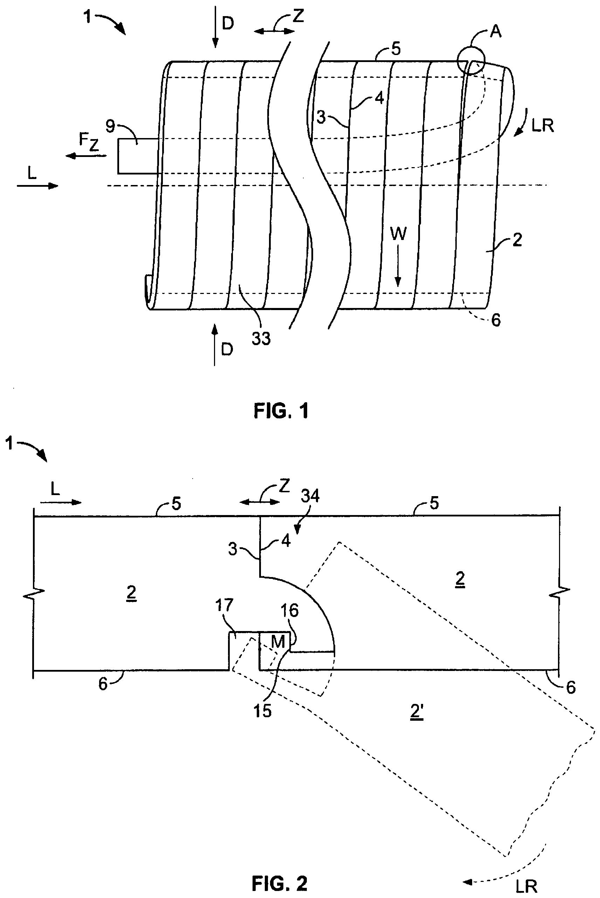

The general construction of a support coil 1 according to the invention will firstly be described with reference to Fig. 1 and the exemplary embodiments illustrated therein.

The support coil 1 is formed by an extruded profile body 2 wound in a winding direction W to form a large number of windings 33. The extruded profile body 2 is in the form of a substantially continuous member produced, for example, by extrusion. Support coils 1 of infinite length can thus theoretically be produced. In practice, the support coils are generally about 30 to 50 cm in length.

In a longitudinal direction L of the support coil 1, end faces 3, 4 of the extruded profile body 2 are joined together, as will be described in greater detail hereinafter with reference to Fig. 2 and 5 to 13. The radially external surface 5 and the radially internal surface 6 are formed substantially parallel to each other in cross-section and form the substantially cylindrical external circumferential surface or internal circumferential surface of the tubular support coil 1. The exemplary support coil 1 in Fig. 1 has a substantially circular cross-section and extends in the longitudinal direction L. Obviously, the support coil 1 can also be configured with alternative cross-sections, for example so as to be oval or square. The extruded profile body 2 in Fig. 1 is made of a flexible, solid material, for example a plastic material. The wound support coil 1 is thus able to withstand radially inwardly acting compressive forces D.

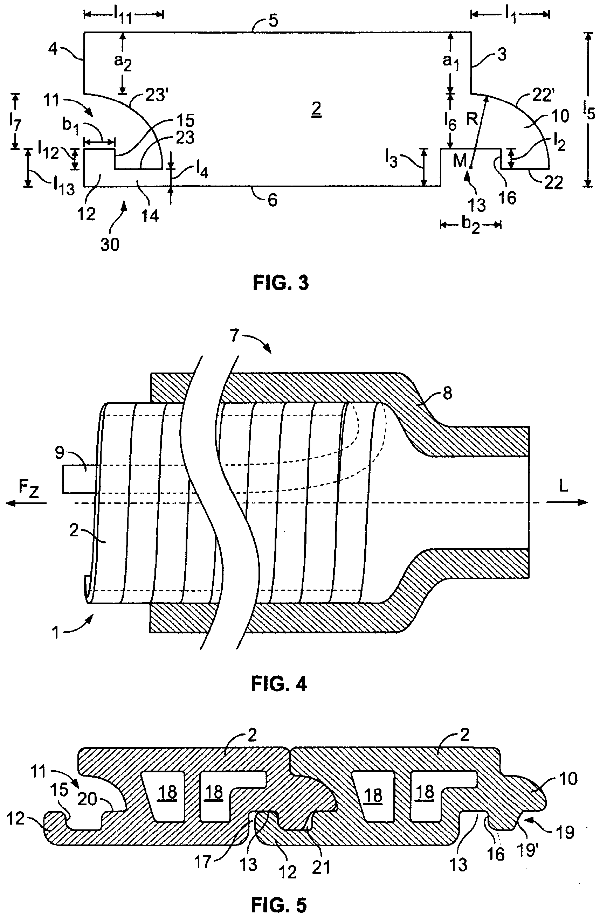

The detailed embodiment of the extruded profile body 2 according to the invention and, in particular, the connection of the end faces 3, 4 in the longitudinal direction L of the support coil 1 will now be described in greater detail with reference to Fig. 2 and 3.

The extruded profile body 2 shown in cross-section in Fig. 3 comprises a tongue 10, a groove 11, a ratchet element 12 and a ratchet mount 13.

The tongue 10 formed on the end face 3 projects in the longitudinal direction L in cross-section of the extruded profile body 2. The tongue 10 is at a distance a1 from the radially external surface 5. Between the external surface 5 and the tongue 10, the end face 3 extends substantially perpendicularly to the external surface 5 or the internal surface 6. Radially outwardly, the tongue 10 has a holding face 22' with a circular contour having a radius R about a center point M. In the exemplary embodiment in Fig. 3, this circular contour of the outer holding face 22' extends as a quarter of a full circle, over 90 degrees, so the protruding length I1 of the tongue 10 is identical or similar to the radius R. The radially inner holding face 22 of the tongue 10 extends substantially in the longitudinal direction L parallel to the external and internal surfaces 5, 6 with a step. This step is part of a substantially rectangular channel formed by the ratchet mount 13.

The ratchet mount 13 has a depth I2 relative to the radially inner side of the tongue 10 and a depth 13 relative to the internal surface 6 of the extruded profile body 2, I3 being greater than 12. The tongue 10 and the ratchet mount 13 are formed on the end face 3 of the extruded profile body 2. In the exemplary embodiment in Fig. 2, the tongue 10 forms the ratchet mount 13 in certain portions.

Opposing the end face 3, on the end face 4, the extruded profile body 2 has the groove 11 and the ratchet element 12.

In the embodiment in Fig. 3, the groove 11 is formed so as to be substantially complementary to the tongue 10 and has, radially outwardly, an outer counter-holding face 23' having a substantially identical circular contour to the tongue 10. The depth I11 of the groove 11 in the longitudinal direction L is substantially identical to the length I1 of the tongue 10. The groove 11 is set apart from the radially external surface 5 by the distance a2, which is substantially identical to a1. Radially inwardly, the groove 11 is delimited by an inner counter-holding face 23 on a projection 14 protruding in the longitudinal direction L. The projection 14 is connected to the ratchet element 12. The radial thickness 14 of the projection 14 is less than the radial thickness 15 of the extruded profile body 2 and than the radial thickness 16 of the tongue 10. The projection 14 forms the region of the entire extruded profile body having the lowest radial thickness 14. A groove opening has a radial length 17 which is substantially identical to a radial length 16 of the tongue.

In Fig. 3, the ratchet element 12 at the end of the projection 14 is of substantially rectangular configuration with a radial thickness 113 which is substantially identical to the depth I3 of the ratchet mount 13. Relative to the projection 14, the ratchet element 12 protrudes radially outward by a length 112 which is substantially identical to the depth 12 of the ratchet mount 13. The width b1 of the ratchet element 12 in the longitudinal direction L is less than the width b2 of the ratchet mount 13. Both the ratchet element 12 and the projection 14 extend radially internally flush in the longitudinal direction L.

If the extruded profile body 2 is wound to form the support coil 1 according to the invention, the tongue 10 and the groove 11 form a tongue and groove arrangement 10, 11 and the ratchet element 12 and the ratchet mount 13 form a ratchet arrangement 12, 13, both arrangements engaging, as shown in Fig. 2.

The tongue 10 fits in the groove 11, so the end faces 3, 4 of the extruded profile body 2 are locked together in the radial direction. This locking is achieved by the substantially interlocking connection of the tongue 10 to the groove 11.

As the ratchet element 12, formed radially inwardly on the extruded profile body 2, engages radially outwardly with the ratchet mount 13 and a holding face 15 of the ratchet element 12 rests against a counter-holding face 16 of the ratchet mount 13, the end faces 3, 4 of the extruded profile body 2 are locked in the longitudinal direction L so as to prevent separation by a tensile force Z. The holding face 15 and the counter-holding face 16 are both oriented substantially perpendicularly to the longitudinal direction L. As the width b1 and the cross-sectional surface area of the ratchet element 12 are smaller than the width b2 and the cross-sectional surface area of the ratchet mount 13, the ratchet mount 13 has a deflection region 17 which is not filled by the ratchet element 12.

In Fig. 2, a broken line denotes a position 2' of the extruded profile body 2 on separation of two of the windings 33 of the support coil 1 according to the invention when the end faces 3, 4 of the extruded profile body 2 are detached by the withdrawal of the free, unwound extruded profile body 2. The tightening, for example at the free end 9, causes the extruded profile body 2 on the winding 33 of the support coil 1 to be rotated radially inwardly in a detachment direction LR. This rotation of the extruded profile body 2 is carried out substantially about an instantaneous center of rotation (the pivot point M). During this movement, the previously connected end faces 3, 4 on the radially outer side move apart from each other and a radially inwardly tapering gap 34 opens up. On the radially inner side of the support coil 1, the rotational movement in the detachment direction LR away from the counter-holding face 16 causes the ratchet element 12 to be pressed into the deflection region 17. As the radially outer contour of the tongue and groove arrangement 10, 11 extends about the pivot point M, the tongue 10 moves smoothly out of the groove 11. The outer counter-holding face 23' slides on the outer holding face 22'.

Moreover, on rotation of the extruded profile body 2 in the detachment direction LR, the ratchet element 12 is pressed radially outwardly against the ratchet mount 13, so the projection 14, which, as a result of the lowest thickness 14, has the greatest deflectability on the extruded profile body 2, is resiliently bent. In the embodiment in Fig. 2, the projection 14 forms a weakened region 30 of the extruded profile body 2, in which the extruded profile body 2 is elastically deformable. As merely the force for resiliently bending the weakened region 30 and frictional forces in the tongue and groove arrangement 10, 11 have to be applied in order to detach the extruded profile body 2', the detaching force FZ can easily be applied manually.

The support coil 1 according to the invention can be used in an exemplary embodiment, illustrated in Fig. 4, of a tube arrangement 7 according to the invention. In the tube arrangement 7 according to the invention, a resiliently expanded tube material 8, such as for example an insulating tube or sleeve body, is kept radially expanded by the support coil 1 according to the invention. The tube material 8 is made, for example, of a resilient, electrically insulating material, for example silicone, and used for electrically insulating electrical components. The tube material 8 is intended to securely enclose the components to be insulated. In order to easily be able to position the tube material 8 around the components to be insulated, it is kept expanded by the support coil 1 according to the invention. If the insulating tube arrangement 7 according to the invention is arranged above the component to be insulated, the support coil 1 can be unwound by pulling on the free end 9 of the extruded profile body 2 with a tensile force FZ and can be withdrawn from the tube arrangement 7 in the longitudinal direction L. Once the support coil 1 has been removed, the expanded insulating tube 8 is relieved and contracts, as illustrated schematically on the right-hand side in Fig. 4.

Fig. 5 shows a further exemplary embodiment of an extruded profile body 2 according to the invention, which is wound to form the support coil 1 according to the invention shown in Fig. 1. Fig. 5, like Fig. 2, shows merely detail A from Fig. 1. For the sake of brevity, merely the differences to the embodiment in Fig. 2 will be examined hereinafter. Identical parts are provided with identical reference numerals.

The extruded profile body 2 in Fig. 5 is in the form of a closed hollow profile comprising inner cavities 18. The configuration as a closed hollow profile has the advantage that the cavities 18 allow material to be saved while the closed profile provides high stability. To facilitate extrusion, the corners in the embodiment in Fig. 5 are each rounded.

In the embodiment in Fig. 5, an additional step 19 is formed between the tongue 10 and the ratchet mount 13. The groove 11 has a corresponding counter-step 20. The step 19 is larger in cross-section than the counter-step 20 and has a bevel 19', so a further deflection region 21 between the step 19 and the counter-step 20 remains free in the locked state. On detachment of the extruded profile body 2 in the detachment direction LR, the counter-step 20 is moved, as described hereinbefore with reference to the ratchet arrangement 11, 12, into the further deflection region 21, without the counter-step 20 interlocking with the step 19. As the counter-step 20 does not contact the step 19 on detachment of the extruded profile body 2, the requisite detaching force FZ remains relatively low. The bevel 19' also facilitates the engagement of the two end faces 3, 4.

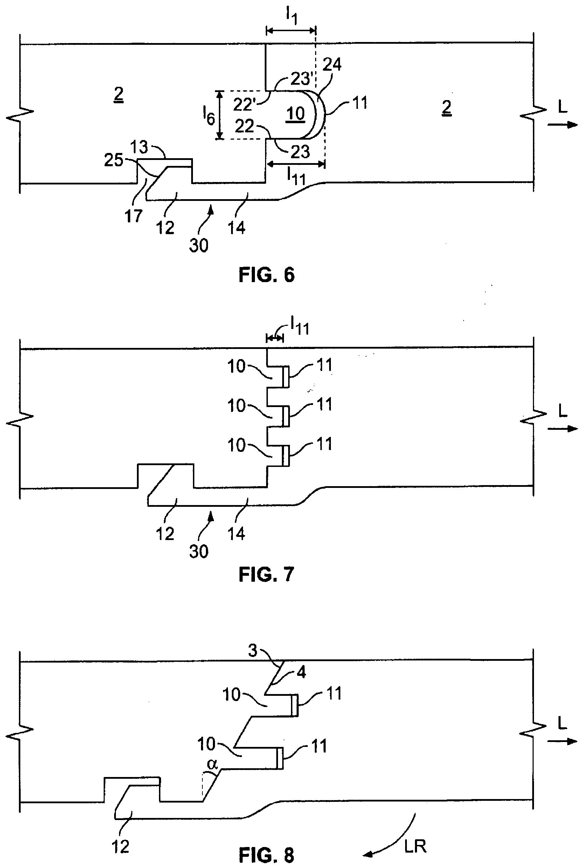

Figs. 6 to 13, described hereinafter, each show further embodiments of the extruded profile body 2 according to the invention wound, as shown in Fig. 1, to form a support coil 1 according to the invention. For the sake of brevity, merely the differences from the remaining embodiments will be examined in each case; identical parts are denoted by identical reference numerals.
In the embodiment in Fig. 6, the tongue 10 is not arcuate on one side in cross-section, but rather is substantially rectangular. The tongue 10 has radially inner and outer holding faces 22, 22' which rest against radially inner and outer counter-holding faces 23, 23' of the groove 11 so as to provide support. The groove 11 is also substantially rectangular and has a substantially identical height I6 in the radial direction to the tongue 10. In contrast to the embodiment in Fig. 3, the depth I11 of the groove 11 is greater than the length I1 of the tongue 10, so that a gap 24 is produced in the longitudinal direction L in the locked state.
In the embodiment in Fig. 6, the ratchet element 12 has a chamfer 25 which opposes the holding face 15 and at least partially forms the deflection region 17. The chamfer 25 allows the profile to be laterally engaged and the ratchet 12 is automatically deflected.
In the embodiment in Fig. 7, the tongue and groove arrangement 10, 11 has three tongues 10 and grooves 11 of substantially identical configuration. The length I11 of the tongue 10 in Fig. 7 is less than the length I11 of the tongue 10 in Fig. 6. However, as the extruded profile body 2 in Fig. 7 has three tongues 10, the radial loading capacity of the support coil 1 in Fig. 7 is substantially identical to that in Fig. 6.

In contrast to the preceding embodiments, the extruded profile body 2 in Fig. 8 has two tongues 10 and two grooves 11 formed on the end faces 3, 4 extending obliquely to the longitudinal direction L. In the embodiment in Fig. 8, the end faces 3, 4 are inclined in the detachment direction LR by an angle α relative to the end faces 3, 4, extending substantially perpendicularly to the longitudinal direction L, of the preceding embodiments. Rotation of the extruded profile body 2 is thus assisted on separation of the end faces 3, 4 and the detaching force FZ is reduced.

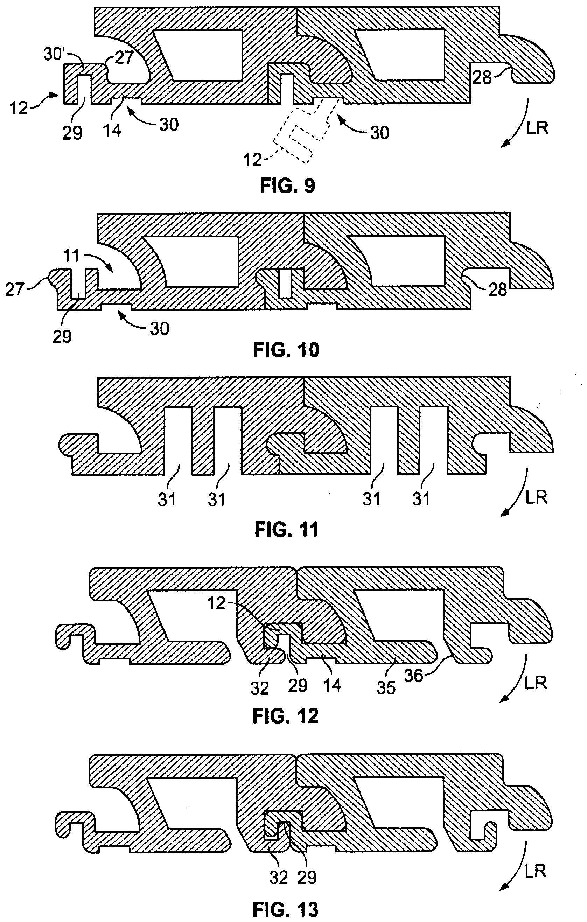

In the embodiment in Fig. 9, the extruded profile body 2 has a ratchet element 12 on which a locking lug 27 is formed on the side facing the groove 11. In the locked state, the locking lug 27 is engaged with a counter-locking means 28 in the ratchet mount 13. The resiliently bendable weakened region 30 allows the locking lug 27 to be resiliently deflected. A secure fit of the ratchet element 12 in the ratchet mount 13 is thus ensured in the support coil 1 according to the invention.

The extruded profile body 2 can optionally be produced with a kinked ratchet element 12, as indicated in Fig. 9 by a broken line. On winding of the support coil 1, the tongue and groove arrangement 10, 11 is engaged first in this optional embodiment. The kinked ratchet element 12 is then pressed into the ratchet mount 13 and engaged, and the weakened region 30 is either elastically deformed and secured by bonding or the like or plastically deformed. This option allows the connecting of the end faces 3, 4 of the extruded profile body 2 to be divided into two method steps and therefore simplified.

In the embodiment in Fig. 9, the ratchet element 12 also has a slot 29. The slot 29 additionally forms in the ratchet element 12 an additional weakened region 30' in which the ratchet element 12 is elastically deformable. The additional weakened region 30' allows the extruded profile body 2 to be rotated more easily on detachment in the detachment direction LR, so the required detaching force FZ is reduced.

In the embodiment in Fig. 10, in contrast to the embodiment in Fig. 9, the locking lug 27 is formed in the side remote from the groove 11 and the slot 29 is radially outwardly opened. The locking lug 27 can thus be deflected more easily and the ratchet arrangement 10, 11 engaged more easily.

In the exemplary embodiment in Fig. 11, the extruded profile body 2 is in the form not of a closed profile, as in the preceding embodiments, but rather of an open profile comprising two material-reducing slots 31. Compared to the closed profile of the preceding embodiments of Fig. 9 and 10, the open profile of the embodiment in Fig. 11 is less rigid, so the extruded profile body 2 can be resiliently bent in the detachment direction LR and can thus be detached more easily from the support coil 1.

In the embodiment in Fig. 12, the extruded profile body 2 is also in the form of an open profile. However, the deformability of the profile in the detachment direction LR is delimited by a stop 35, which a stop face 36 strikes during deformation. In this embodiment, the ratchet element 12 is in the form of an angular hook extending counter to the detachment direction LR. In the embodiment in Fig. 12, the ratchet mount 13 has a holding projection 32, which protrudes in the longitudinal directional LR and prevents the ratchet element 12 from moving radially inwardly. On detachment of the extruded profile body 2 in the detachment direction LR, the ratchet element 12 rotates about the holding projection 32 out of the ratchet mount 13.

In the embodiment in Fig. 13, the holding projection 32 is additionally configured, compared to the embodiment in Fig. 12, as a hook, which engages with the slot 29 in the ratchet element 12.

## Claims

1. Tubular support coil (1) for radially supporting resiliently expanded tube material (8), consisting of at least one extruded profile body (2) which is wound to form a plurality of windings (33) and the end faces (3, 4) of which are mechanically locked together by a ratchet arrangement (12, 13) in the longitudinal direction (L) **characterized in that** the end faces (3, 4) are further mechanically locked together by a tongue and groove arrangement (10, 11) in the radial direction, wherein on one end face (3) of the winding (33) there are formed at least one tongue (10) projecting into the longitudinal direction (L) and a ratchet mount (13) and wherein on the other end face (4) of the winding (33) there are formed at least one groove (11) substantially complementary to the at least one tongue (10) and a ratchet element (12).

2. Support coil (1) according to claim 1, **characterized in that** the tongue and groove arrangement (10, 11) is engaged in the longitudinal direction (L) and **in that** the tongue and groove arrangement (10, 11) is located outside the ratchet arrangement (12, 13) in the radial direction.

3. Support coil (1) according to either claim 1 or claim 2, **characterized in that** the ratchet arrangement (12, 13) is located, in the radial direction, within or around a pivot point (M) about which the extruded profile body (2) rotates on separation of the end faces (3, 4) by withdrawing the unwound extruded profile body (2) from the support coil (1).

4. Support coil (1) according to any one of the above-mentioned claims, **characterized in that** the ratchet arrangement (12, 13) is located within the support coil (1) in the radial direction.

5. Support coil (1) according to any one of the above-mentioned claims, **characterized in that** the extruded profile body (2) has at least one weakened region (30) which is formed between the tongue and groove arrangement (10, 11) and the ratchet arrangement (12, 13) and in which the extruded profile body (2) is elastically or plastically deformable.

6. Support coil (1) according to claim 5, **characterized in that** the weakened region (30) is formed between a tongue (10) of the tongue and groove arrangement (10, 11) and a ratchet element (12) of the ratchet arrangement (12, 13).

7. Support coil (1) according to either claim 5 or claim 6, **characterized in that** the weakened region (30) has the lowest radial thickness (I4) of the extruded profile body (2).

8. Support coil (1) according to any one of the above-mentioned claims, **characterized in that** the ratchet arrangement (12, 13) has a deflection region (17) which is not filled by the ratchet element (12) relative to a ratchet mount (13) and into which the ratchet element (12) can be moved on separation of the end faces (3, 4).

9. Support coil (1) according to any one of the above-mentioned claims, **characterized in that** the ratchet arrangement (12, 13) and the tongue and groove arrangement (10, 11) are mutually integrated in certain portions.

10. Support coil (1) according to any one of the above-mentioned claims, **characterized in that** the tongue and groove arrangement (10, 11) is substantially rectangular in cross-section of the extruded profile body (2).

11. Support coil (1) according to any one of claims 1 to 9, **characterized in that** the tongue and groove arrangement (10, 11) extends substantially in the shape of an arc on the radially outer side, in cross-section of the extruded profile body (2).

12. Support coil (1) according to claim 11, **characterized in that** the arc is formed substantially as an arc of a circle around a pivot point (M) about which the extruded profile body (2) substantially rotates on separation of the end faces (3, 4) by withdrawing the unwound extruded profile body (2) from the support coil (1).

13. Support coil (1) according to any one of the above-mentioned claims, **characterized in that** the ratchet arrangement (12, 13) has at least one securing element (27), which secures the fit of the ratchet element (12) in the ratchet mount (13).

14. Support coil (1) according to any one of the above-mentioned claims, **characterized in that** the extruded profile body (2) is in the form of a closed hollow profile.

15. Support coil (1) according to any one of the above-mentioned claims, **characterized in that** the tongue and groove arrangement (10, 11) is bonded or welded, at least in certain portions.

16. Method for producing a support coil (1) according to any of the claims 1 to 15, for radially supporting resiliently expanded tube material (8), wherein an extruded profile body (2) is wound to form the support coil (1) and the end faces (3, 4) of the extruded profile body (2) are axially joined together by a ratchet arrangement (12, 13) so as to be secured against pull in the longitudinal direction (L), **characterized in that** the end faces (3, 4) of the extruded profile body (2) are engaged using a tongue and groove arrangement (10, 11) so as to be secured against radial displacement in the longitudinal direction (L).

17. Method according to claim 16, **characterized in that**, on connecting the end faces (3, 4), first the tongue and groove arrangement (10, 11) and then the ratchet arrangement (12, 13) are engaged.

18. Tube arrangement (7) comprising a tube material (8) which is resiliently expanded radially outward and comprising a support coil (1) which is arranged in the tube material (8) and radially inwardly supports the expanded tube material (8), **characterized in that** the support coil (1) is configured in accordance with any one of claims 1 to 15.

## Patentansprüche

1. Röhrenförmige Stützwendel (1) zum radialen Stützen von elastisch gedehntem Röhrenmaterial (8), die aus wenigstens einem Stranggussprofil-Körper (2) besteht, der so gewickelt ist, dass er eine Vielzahl von Windungen (33) bildet, und dessen Endflächen (3, 4) mittels einer Sperrklinken-Anordnung (12, 13) in der Längsrichtung (L) mechanisch aneinander arretiert sind, **dadurch gekennzeichnet, dass** die Endflächen (3, 4) des Weiteren über eine Feder-Nut-Anordnung (10, 11) in der radialen Richtung mechanisch aneinander arretiert sind, wobei an einer Endfläche (3) der Windung (33) wenigstens eine Feder (10), die in der Längsrichtung (L) vorsteht, sowie eine Sperrklinken-Aufnahme (13) ausgebildet sind und an der anderen Endfläche (4) der Windung (13) wenigstens eine Nut (11), die im Wesentlichen komplementär zu der wenigstens einen Feder (10) ist, sowie ein Sperrklinken-Element (12) ausgebildet sind.

2. Stützwendel (1) nach Anspruch 1, **dadurch gekennzeichnet, dass** die Feder-Nut-Anordnung (10, 11) in der Längsrichtung (L) in Eingriff ist und das sich die Feder-Nut-Anordnung (10, 11) in der radialen Richtung außerhalb der Sperrklinken-Anordnung (12, 13) befindet.

3. Stützwendel (1) nach Anspruch 1 oder Anspruch 2, **dadurch gekennzeichnet, dass** die Sperrklinken-Anordnung (12, 13) in der radialen Richtung innerhalb eines Drehpunktes (M), um den sich der Stranggussprofil-Körper (2) bei Trennung der Endflächen (3, 4) durch Abziehen des abgewickelten Stranggussprofil-Körpers (2) von der Stützwendel (1) dreht, oder um ihn herum angeordnet ist.

4. Stützwendel (1) nach einem der vorangehenden Ansprüche, **dadurch gekennzeichnet, dass** sich die Sperrklinken-Anordnung (12, 13) in der radialen Richtung innerhalb der Stützwendel (1) befindet.

5. Stützwendel (1) nach einem der vorangehenden Ansprüche, **dadurch gekennzeichnet, dass** der Stranggussprofil-Körper (2) wenigstens einen verdünnten Bereich (30) aufweist, der zwischen der Feder-Nut-Anordnung (10, 11) und der Sperrklinken-Anordnung (12, 13) ausgebildet ist und in dem der Stranggussprofil-Körper (2) elastisch oder plastisch verformt werden kann.

6. Stützwendel (1) nach Anspruch 5, **dadurch gekennzeichnet, dass** der verdünnte Bereich (30) zwischen einer Feder (10) der Feder-Nut-Anordnung (10, 11) und einem Sperrklinken-Element (12) der Sperrklinken-Anordnung (12, 13) ausgebildet ist.

7. Stützwendel (1) nach Anspruch 5 oder Anspruch 6, **dadurch gekennzeichnet, dass** der verdünnte Bereich (30) die geringste radiale Dicke (I4) des Stranggussprofil-Körpers (2) hat.

8. Stützwendel (1) nach einem der vorangehenden Ansprüche, **dadurch gekennzeichnet, dass** die Sperrklinken-Anordnung (12, 13) einen Biegungs-Bereich (17) relativ zu einer Sperrklinken-Aufnahme hat, der durch das Sperrklinken-Element (12) nicht gefüllt wird und in den das Sperrklinken-Element (12) bei Trennung der Endflächen (3, 4) hinein bewegt werden kann.

9. Stützwendel (1) nach einem der vorangehenden Ansprüche, **dadurch gekennzeichnet, dass** die Sperrklinken-Anordnung (12, 13) und die Feder-Nut-Anordnung (10, 11) in bestimmten Abschnitten ineinander integriert sind.

10. Stützwendel (1) nach einem der vorangehenden Ansprüche, **dadurch gekennzeichnet, dass** die Feder-Nut-Anordnung (10, 11) im Querschnitt des Stranggussprofil-Körpers (2) im Wesentlichen rechteckig ist.

11. Stützwendel (1) nach einem der Ansprüche 1 bis 9, **dadurch gekennzeichnet, dass** sich die Feder-Nut-Anordnung (10, 11) im Querschnitt des Stranggussprofil-Körpers (2) im Wesentlichen in der Form eines Bogens an der radial außen liegenden Seite erstreckt.

12. Stützwendel (1) nach Anspruch 1 oder Anspruch 2, **dadurch gekennzeichnet, dass** der Bogen im Wesentlichen als ein Kreisbogen um einen Drehpunkt (M) herum ausgebildet ist, um den sich der Stranggussprofil-Körper (2) bei Trennung der Endflächen (3, 4) durch Abziehen des abgewickelten Stranggussprofil-Körpers (2) von der Stützwendel (1) dreht.

13. Stützwendel (1) nach einem der vorangehenden Ansprüche, **dadurch gekennzeichnet, dass** die Sperrklinken-Anordnung (12, 13) wenigstens ein Sicherungselement (27) aufweist, das die Passung des Sperrklinken-Elementes (12) in der Sperrklinken-Aufnahme (13) sichert.

14. Stützwendel (1) nach einem der vorangehenden Ansprüche, **dadurch gekennzeichnet, dass** der Stranggussprofil-Körper (2) die Form eines geschlossenen Hohlprofils hat.

15. Stützwendel (1) nach einem der vorangehenden Ansprüche, **dadurch gekennzeichnet, dass** die Feder-Nut-Anordnung (10, 11) wenigstens in bestimmten Abschnitten verklebt oder verschweißt ist.

16. Verfahren zum Herstellen einer Stützwendel (1) nach einem der Ansprüche 1 bis 15, mit dem elastisch gedehntes Röhrenmaterial (8) radial gestützt wird, wobei ein Stranggussprofil-Körper (2) gewickelt wird, um die Stützwendel (1) auszubilden, und die Endflächen (3, 4) des Stranggussprofil-Körpers (2) mittels einer Sperrklinken-Anordnung (12, 13) axial so miteinander verbunden sind, dass sie gegen Zug in der Längsrichtung (L) gesichert sind, **dadurch gekennzeichnet, dass** die Endflächen (3, 4) des Stranggussprofil-Körpers (2) mittels einer Feder-Nut-Anordnung (10, 11) in Eingriff gebracht werden und so gegen radiale Verschiebung in der Längsrichtung (L) gesichert werden.

17. Verfahren nach Anspruch 16, **dadurch gekennzeichnet, dass** beim Verbinden der Endflächen (3, 4) zunächst die Feder-Nut-Anordnung (10, 11) und dann die Sperrklinken-Anordnung (12, 13) in Eingriff gebracht werden.

18. Röhren-Anordnung (7), die ein Röhrenmaterial (8) umfasst, das elastisch radial nach außen gedehnt ist, und eine Stützwendel (1) umfasst, die in dem Röhrenmaterial (8) angeordnet ist und das gedehnte Röhrenmaterial (8) innen radial stützt, **dadurch gekennzeichnet, dass** die Stützwendel (1) gemäß einem der Ansprüche 1 bis 15 ausgeführt ist.

## Revendications

1. Support de ruban hélicoïdal tubulaire (1) pour supporter radialement le matériau tubulaire expansé et résilient (8), consistant en au moins un corps profilé extrudé (2) qui est enroulé pour former une pluralité d'enroulements (33) et dont les faces d'extrémité (3, 4) sont verrouillées mécaniquement par un agencement à rochet (12, 13) dans le sens longitudinal (L), **caractérisé en ce que** les faces d'extrémité (3, 4) sont en outre bloquées mécaniquement agencement par un agencement à languette et rainure (10, 11) dans la direction radiale, dans lequel sur une face d'extrémité (3) de l'enroulement (33) sont formés au moins une languette (10) faisant saillie dans la direction longitudinale (L) et un agencement à rochet (13) et dans lequel, sur l'autre face d'extrémité (4) de l'enroulement (33), sont formés au moins une rainure (11) sensiblement complémentaire de ladite au moins une languette (10) et un élément à rochet (12).

2. Support de ruban hélicoïdal (1) selon la revendication 1, **caractérisé en ce que** l'agencement à languette et rainure (10, 11) est engagé dans la direction longitudinale (L) et **en ce que** l'agencement à languette et rainure (10, 11) est situé à l'extérieur de l'agencement à rochet (12, 13) dans la direction radiale.

3. Support de ruban hélicoïdal (1) selon la revendication 1 ou la revendication 2, **caractérisé en ce que** l'agencement à rochet (12, 13) est situé, dans la direction radiale, à l'intérieur ou autour d'un point de pivotement (M) autour duquel le corps profilé extrudé (2) tourne lors de la séparation des faces d'extrémité (3, 4) en retirant le corps profilé extrudé déroulé (2) du support de ruban hélicoïdal (1).

4. Support de ruban hélicoïdal (1) selon l'une quelconque des revendications précédentes, **caractérisé en ce que** l'agencement à rochet (12, 13) est situé dans le support de ruban hélicoïdal (1) dans la direction radiale.

5. Support de ruban hélicoïdal (1) selon l'une quelconque des revendications précédentes, **caractérisé en ce que** le corps profilé extrudé (2) comporte au moins une zone affaiblie (30) formée entre l'agencement à languette et rainure (10, 11) et l'agencement à rochet (12, 13) et dans lequel le corps profilé extrudé (2) est élastiquement ou plastiquement déformable.

6. Support de ruban hélicoïdal (1) selon la revendication 5, **caractérisé en ce que** la zone affaiblie (30) est formée entre une languette (10) de l'agencement à languette et rainure (10, 11) et un élément à rochet (12) de l'agencement à rochet (12, 13).

7. Support de ruban hélicoïdal (1) selon la revendication 5 ou la revendication 6, **caractérisé en ce que** la zone (30) présente l'épaisseur radiale la plus faible (14) du corps profilé extrudé (2).

8. Support de ruban hélicoïdal (1) selon l'une quelconque des revendications précédentes, **caractérisé en ce que** l'ensemble à rochet (12, 13) présente une zone de déviation (17) qui n'est pas remplie par l'élément à rochet (12) par rapport à un ensemble à rochet (13) et dans lequel l'élément à rochet (12) peut être déplacé lors de la séparation des faces d'extrémité (3, 4).

9. Support de ruban hélicoïdal (1) selon l'une quelconque des revendications précédentes, **caractérisé en ce que** l'agencement à rochet (12, 13) et l'agencement à languette et rainure (10, 11) sont mutuellement intégrés dans certaines parties.

10. Support de ruban hélicoïdal (1) selon l'une quelconque des revendications précédentes, **caractérisé en ce que** l'agencement à languette et rainure (10, 11) est sensiblement rectangulaire en coupe transversale du corps profilé extrudé (2).

11. Support de ruban hélicoïdal (1) selon l'une quelconque des revendications 1 à 9, **caractérisé en ce que** l'agencement à languette et rainure (10, 11) s'étend sensiblement sous forme d'un arc sur le côté extérieur radial, en coupe transversale du corps profilé extrudé (2).

12. Support de ruban hélicoïdal (1) selon la revendication 11, **caractérisé en ce que** l'arc est sensiblement en forme d'arc de cercle autour d'un point de pivotement (M) autour duquel le corps profilé extrudé (2) tourne sensiblement lors de la séparation des faces d'extrémité (3, 4) en retirant le corps profilé extrudé déroulé (2) du support de ruban hélicoïdal (1).

13. Support de ruban hélicoïdal (1) selon l'une quelconque des revendications précédentes, **caractérisé en ce que** l'agencement à rochet (12, 13) comporte au moins un élément de fixation (27) qui sécurise l'ajustement de l'élément à rochet (12) dans l'ensemble à rochet (13).

14. Support de ruban hélicoïdal (1) selon l'une quelconque des revendications précédentes, **caractérisé en ce que** le corps profilé extrudé (2) est en forme de profil creux fermé.

15. Support de ruban hélicoïdal (1) selon l'une quelconque des revendications précédentes, **caractérisé en ce que** l'agencement à languette et rainure (10, 11) est collé ou soudé, au moins dans certaines parties.

16. Procédé de production d'un support de ruban hélicoïdal (1) selon l'une quelconque des revendications 1 à 15, pour un matériau de tube expansé résilient de support radial (8), dans lequel un corps profilé extrudé (2) est enroulé pour former le support de ruban hélicoïdal (1) et les faces d'extrémité (3,4) du corps profilé extrudé (2) sont assemblés axialement par un ensemble à rochet (12, 13) de manière à être bloqués contre la traction dans la direction longitudinale (L), **caractérisé en ce que** les surfaces d'extrémité (3, 4) du corps profilé extrudé (2) sont mises en prise à l'aide d'un agencement à languette et rainure (10, 11) de manière à être protégées contre le déplacement radial dans la direction longitudinale (L).

17. Procédé selon la revendication 16, **caractérisé en ce que**, lors de la connexion des faces d'extrémité (3, 4), on commence par mettre en prise l'agencement à rainure et languette (10, 11) puis l'agencement à rochet (12, 13).

18. Agencement tubulaire (7) comprenant un matériau tubulaire (8) qui est expansé résilient radialement vers l'extérieur et comprenant un support de ruban hélicoïdal (1) qui est disposé dans le matériau tubulaire (8) et supportant radialement vers l'intérieur le matériau tubulaire expansé (8), **caractérisé en ce que** le support de ruban hélicoïdal (1) est configuré conformément à l'une quelconque des revendications 1 à 15.
